# EUROPEAN PATENT SPECIFICATION

(11) **EP 4 317 744 B1**
(45) Date of publication and mention of the grant of the patent: **22.07.2026**
(21) Application number: 22780673.4
(22) Date of filing: 28.03.2022
(51) Int. Cl.: F16H 25/22

(54) **BALL SCREW DEVICE**
KUGELGEWINDETRIEB
DISPOSITIF DE VIS À BILLE

(30) Priority: 31.03.2021 JP 2021062260
(43) Date of publication of application: 07.02.2024
(73) Proprietor: NSK Ltd., Tokyo 141-8560 (JP)
(72) Inventor: YABE, Takayuki, Fujisawa-shi, Kanagawa 252-0811 (JP)
(74) Representative: SSM Sandmair
(86) International application number: PCT/JP2022/014786
(87) International publication number: WO 2022/210462

(56) References cited:
- CN-C- 100 398 872
- JP-A- 2004 108 408
- JP-A- S56 120 851
- JP-A- S56 147 954
- US-A1- 2011 239 799

## Description

### Field

The present invention relates to a ball screw device.

### Background

A ball screw device of Patent Literature 1 has two ball rolling paths. In the ball screw device of Patent Literature 1, an internal thread of a nut and an external thread of a screw shaft are alternately arranged with respect to two rolling paths. Furthermore, a distance between the internal thread and the external thread is smaller than a ball diameter. As a result, the ball is held between the internal thread and the external thread, and a preload is applied to the ball. In addition, the ball screw device of Patent Literature 1 includes two tubes as components for circulating the balls. An inside of each of the tubes is a return path where the ball passes through. Furthermore, ends of the two tubes are arranged adjacent to each other, and balls picked up from a first rolling path and balls picked from a second rolling path enter these ends.

### Citation List

### Patent Literature

Patent Literature 1: Japanese Patent Application Laid-open No. S56-147954

### Summary

### Technical Problem

In a ball screw device, a nut is required to be downsized in an axial direction. As a method of downsizing, it is conceivable to reduce a width of an internal thread or an external thread in the axial direction. When the width of the internal thread or the external thread is reduced in the axial direction, a distance between centers of a first rolling path and a second rolling path is reduced. As a result, it is also necessary to reduce a distance between centers of ends of two tubes where balls are picked up. However, when the distance between the centers of the ends of the two tubes is short, annular walls configuring the tubes may come into contact with each other. Therefore, in the ball screw device of Patent Literature 1, the distance between the centers of the two tubes cannot be reduced. Thus, in the ball screw device of Patent Literature 1, downsizing of the nut in the axial direction cannot be achieved.

The present invention has been made in view of the above problem, and it is therefore an object of the present invention to provide a ball screw device capable of downsizing the nut in the axial direction.

### Solution to Problem

To achieve the above object, a ball screw device according to claim 1 is provided. The ball screw device comprises: a nut including an internal thread and two outer peripheral raceway surfaces arranged between the internal threads; a screw shaft including an external thread and two inner peripheral raceway surfaces arranged between the external threads; a plurality of balls arranged on two rolling paths between the two outer peripheral raceway surfaces and the two inner peripheral raceway surfaces; and two circulation components configured to circulate the plurality of balls, one of the two circulation components being provided at one end of the nut and an other of the two circulation components being provided on an other end of the nut, wherein the internal thread and the external thread hold the plurality of balls, the nut includes: a cylindrical body having a cylindrical shape and including the internal thread and the two outer peripheral raceway surfaces; and two return paths penetrating the cylindrical body in an axial direction parallel to an axis of the screw shaft, and each of the two circulation components includes: a main body fixed to the cylindrical body of the nut; two communication paths penetrating the main body and communicating the two rolling paths and the two return paths; a communication path partition wall between the two communication paths so as to partition the two communication paths; and two tongues protruding from the main body to the two rolling paths.

A ball screw device of the present invention circulates balls using two return paths and two communication paths. By adjusting a thickness of a communication path partition wall, a distance between centers of the two communication paths can be reduced. Therefore, the distance between the centers of the two communication paths can be made equivalent to a distance between centers of balls in a first path and a second path. Therefore, the nut can be downsized in the axial direction by reducing the width of the internal thread or the external thread.

As an embodiment of the ball screw device, the cylindrical body of the nut includes two housing grooves recessed from both end surfaces in the axial direction, the two housing grooves configured to house the two circulation components, and the two circulation components are respectively disposed in the two housing grooves.

A circulation component is housed in a housing groove to downsize the nut in the axial direction.

### Advantageous Effects of Invention

According to a ball screw device of the present invention, a nut can be downsized in an axial direction.

### Brief Description of Drawings

FIG. 1 is a schematic view of a ball screw device according to an embodiment.
FIG. 2 is a diagram of a nut seen from one side in an axial direction according to the embodiment.
FIG. 3 is a diagram of the nut seen from an other side in the axial direction according to the embodiment.
FIG. 4 is a perspective view of a screw shaft and a circulation section according to the embodiment.
FIG. 5 is a cross-sectional view taken along line V-V in FIG. 1.
FIG. 6 is a cross-sectional view taken along line VI-VI in FIG. 1.
FIG. 7 is a diagram illustrating a relationship between the screw shaft and a tube of a ball screw according to a comparative example.

### Description of Embodiments

Hereinafter, the present invention will be described in detail with reference to the drawings. Note that the present invention is not limited to the following mode for carrying out the present invention (hereinafter referred to as an embodiment). In addition, components in the following embodiment include those that can be easily assumed by those skilled in the art, those that are substantially the same, and those within a so-called equivalent range. Furthermore, the components disclosed in the following embodiment can be appropriately combined.

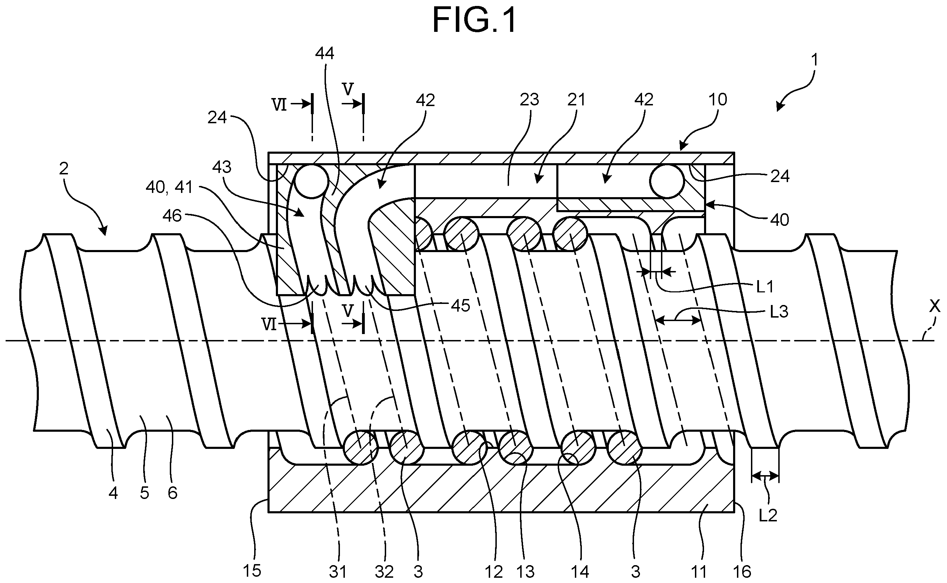

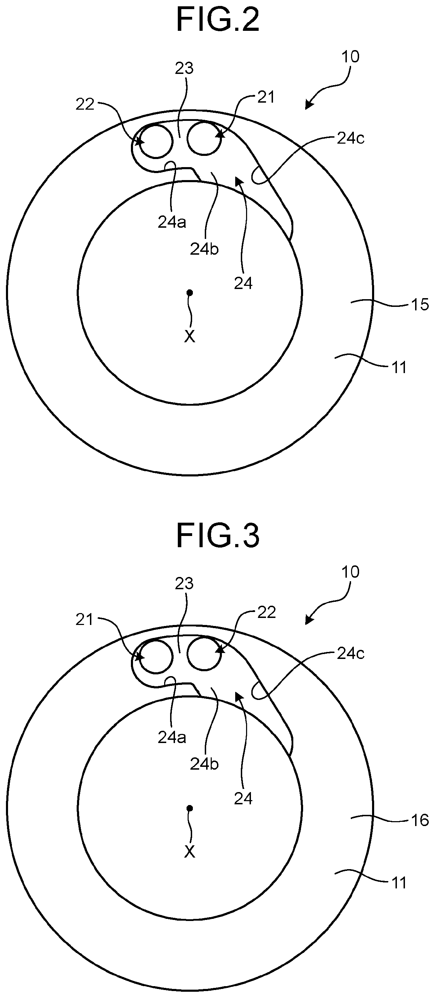

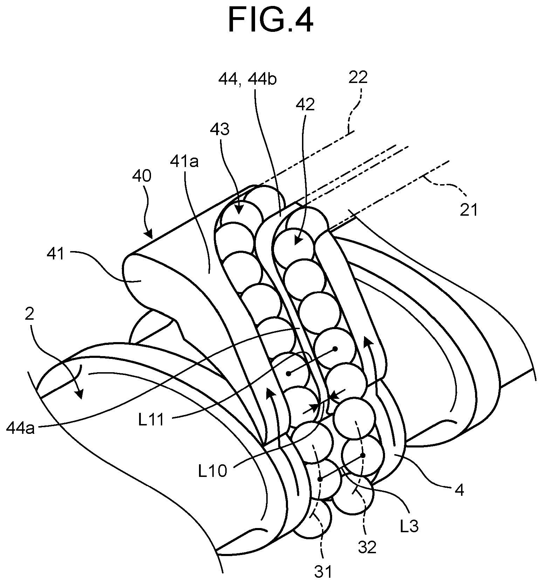

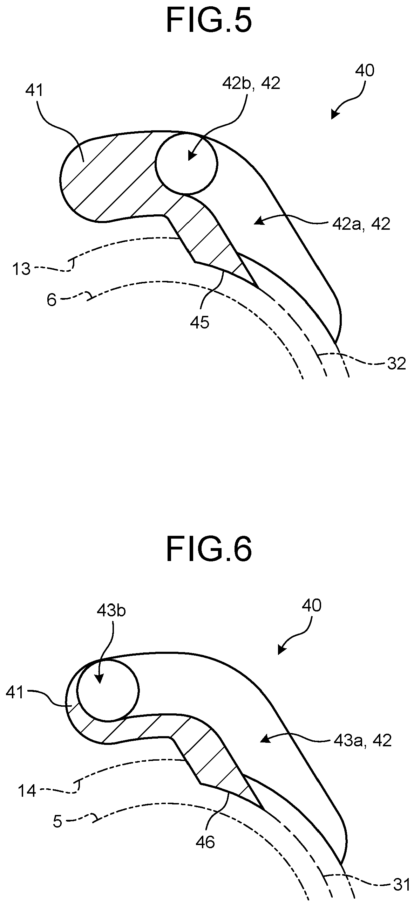

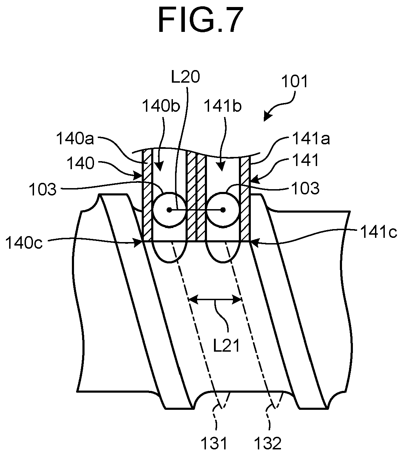

FIG. 1 is a schematic view of a ball screw device according to an embodiment. FIG. 2 is a diagram of a nut seen from one side in an axial direction according to the embodiment. FIG. 3 is a diagram of the nut seen from an other side in the axial direction according to the embodiment. FIG. 4 is a perspective view of a screw shaft and a circulation section according to the embodiment. FIG. 5 is a cross-sectional view taken along line V-V in FIG. 1. FIG. 6 is a cross-sectional view taken along line VI-VI in FIG. 1. FIG. 7 is a diagram illustrating a relationship between the screw shaft and a tube of a ball screw according to a comparative example.

### (Embodiment)

As illustrated in FIG. 1, a ball screw device 1 includes a screw shaft 2, a nut 10, a plurality of balls 3 disposed between the screw shaft 2 and the nut 10, and two circulation components 40 and 40. The screw shaft 2 includes an external thread 4 protruding radially outward from an outer peripheral surface and two paths that are a first inner peripheral drive surface 5 and a second inner peripheral drive surface 6 disposed between the external threads 4. Hereinafter, a direction parallel to an axis X of the screw shaft 2 is referred to as an axial direction.

The nut 10 includes a cylindrical body 11 having a cylindrical shape and penetrated by the screw shaft 2, two return paths 21 and 22 (see FIGS. 2 and 3 for return path 22), a return path partition wall 23, and housing grooves 24 and 24. The cylindrical body 11 includes an internal thread 12 protruding radially inward from an inner peripheral surface, and two paths that are a first outer peripheral drive surface 13 and a second outer peripheral drive surface 14 arranged between the internal threads 12.

The second outer peripheral drive surface 14 faces the first inner peripheral drive surface 5 in a radial direction. A first rolling path 31 is formed between the first inner peripheral drive surface 5 and the second outer peripheral drive surface 14. The first outer peripheral drive surface 13 faces the second inner peripheral drive surface 6 in the radial direction. A second rolling path 32 is formed between the second inner peripheral drive surface 6 and the first outer peripheral drive surface 13. The internal thread 12 is arranged to be shifted from the external thread 4 in the axial direction by a half of one lead of the external thread 4. In other words, the external thread 4 and the internal thread 12 are alternately arranged between the rolling paths 31 and 32.

The plurality of balls 3 is disposed on each of the first rolling path 31 and the second rolling path 32. A diameter of the ball 3 is slightly larger than a distance between the external thread 4 and the internal thread 12. In other words, the ball 3 is held between the external thread 4 and the internal thread 12, and a preload is applied to the ball 3. Therefore, the ball 3 comes into two-point contact with the external thread 4 and the internal thread 12, and thus a behavior of the ball 3 is stable. The balls 3 on the first rolling path 31 and the balls 3 on the second rolling path 32 are arranged in a back-to-back combination.

As illustrated in FIGS. 2 and 3, end surfaces 15 and 16 of the cylindrical body 11 of the nut 10 have a circular outer shape. The end surfaces 15 and 16 of the cylindrical body 11 are provided with a housing groove 24 recessed in the axial direction. The housing groove 24 is a space for housing the circulation component 40. As a result, the circulation component 40 does not protrude in the axial direction from the end surfaces 15 and 16 of the cylindrical body 11, and thus an increase in a size of the nut 10 in the axial direction is avoided. A shape of the housing groove 24 seen from the axial direction corresponds to a shape of the circulation component 40 in the axial direction. The cylindrical body 11 has an inner side surface 24a along an inner peripheral side of the housing groove 24, a bottom surface 24b of the housing groove 24, and an outer side surface 24c along an outer peripheral side of the housing groove 24.

The return paths 21 and 22 penetrate the cylindrical body 11 and linearly extend in the axial direction. Openings of the return paths 21 and 22 are provided in the bottom surface 24b. The return paths 21 and 22 are partitioned by the return path partition wall 23 that is a part of the cylindrical body 11. Diameters of the return paths 21 and 22 are slightly larger than the diameter of the ball 3. Therefore, the balls 3 smoothly roll inside the return paths 21 and 22.

In the embodiment, as illustrated in FIG. 1, an axial length L1 of the internal thread 12 of the nut 10 is shorter than an axial length L2 of the external thread 4 of the screw shaft 2. Therefore, the nut 10 is downsized in the axial direction for a reduced axial length of the internal thread 12. As a result, a distance L3 (see FIGS. 1 and 4) between centers of the first rolling path 31 and the second rolling path 32 arranged between the internal threads 12 is also reduced.

The circulation component 40 is a resin component that guides the balls 3 on the rolling paths 31 and 32 to the return paths 21 and 22 of the nut 10 to circulate the balls 3. The circulation component 40 includes a main body 41 fitted into the housing groove 24 of the nut 10, two communication paths 42 and 43, a communication path partition wall 44, and two tongues 45 and 46 (see FIG. 1).

As illustrated in FIG. 1, the main body 41 of the circulation component 40 is disposed in the housing groove 24 of the nut 10. The main body 41 is held between the inner side surface 24a and the outer side surface 24c of the housing groove 24 (see FIGS. 2 and 3), and is fixed to the nut 10. In addition, as illustrated in FIG. 4, the main body 41 has an outer peripheral surface 41a radially facing outward. The outer peripheral surface 41a faces the outer side surface 24c.

As illustrated in FIG. 4, the communication paths 42 and 43 are radially opened outward. In other words, in the communication paths 42 and 43, the outer peripheral surface 41a of the main body 41 is cut out to expose the communication paths 42 and 43 from the outer peripheral surface 41a of the main body 41. A radially outer side of the communication paths 42 and 43 is closed by the outer side surface 24c of the nut. Therefore, the balls 3 roll along the communication paths 42 and 43. Diameters of the communication paths 42 and 43 are slightly larger than the diameter of the ball 3. Thus, the balls 3 smoothly roll inside the communication paths 42 and 43.

As illustrated in FIGS. 5 and 6, the communication paths 42 and 43 include first communication paths 42a and 43a that extend in a radial outward direction from the rolling paths 31 and 32 and then extend in a circumferential direction, and second communication paths 42b and 43b that extend in the axial direction from the first communication paths 42a and 43a.

As illustrated in FIG. 4, the communication path partition wall 44 is a wall that partitions the communication paths 42 and 43. The communication path partition wall 44 includes a first communication path partition wall 44a interposed between the first communication paths 42a and 43a and a second communication path partition wall 44b interposed between the second communication paths 42b and 43b.

A thickness L10 of the first communication path partition wall 44a is equal to the axial length L1 of the internal thread 12. Therefore, a distance L11 between centers of the first communication paths 42a and 43a is same as the distance L3 between the centers of the first rolling path 31 and the second rolling path 32.

A thickness of the second communication path partition wall 44b is same as the thickness of the return path partition wall 23. In other words, a distance between centers of the second communication paths 42b and 43b and the distance between the centers of the return paths 21 and 22 are the same.

As illustrated in FIGS. 5 and 6, the tongues 45 and 46 enter the first rolling path 31 and the second rolling path 32 to pick up the balls 3 into the communication paths 42 and 43.

Next, effects of the ball screw device 1 of the present embodiment will be described. First, a comparative example will be described with reference to FIG. 7. In the comparative example, a ball screw device 101 including two tubes 140 and 141 as circulation components will be described. As illustrated in FIG. 7, the tubes 140 and 141 have annular walls 140a and 141a, and insides of the walls 140a and 141a are return paths 140b and 141b, respectively.

Ends 140c and 141c of the two tubes 140 and 141 are open toward a rolling paths 131 and 132 to pick up the balls 3 on the rolling paths 131 and 132. Here, two walls 140a and 141a are interposed between the return paths 140b and 141b. Therefore, a distance L20 between centers of the return paths 140b and 141b is relatively large. As a result, a distance L21 between centers of the rolling paths 131 and 132 corresponding to the distance L20 is also increased. In other words, when the two tubes 140 and 141 are used as the circulation components, it is difficult to reduce an axial length of an internal thread of a nut (not illustrated) between the rolling paths 131 and 132.

On the other hand, according to the embodiment, as illustrated in FIG. 4, a single piece of the first communication path partition wall 44a partitions the two first communication paths 42a and 43a, and thus the distance L11 between the centers of the first communication paths 42a and 43a is small. Therefore, the distance L3 between the centers of the first rolling path 31 and the second rolling path 32 can be reduced. In other words, the axial length of the internal thread 12 can be reduced.

As described above, the ball screw device 1 according to the embodiment includes the screw shaft 2, the nut 10, the ball 3, and the two circulation components 40. The screw shaft 2 has the external thread 4 and two inner peripheral raceway surfaces (first inner peripheral drive surface 5 and second inner peripheral drive surface 6) arranged between the external threads 4. The nut 10 has the internal thread 12 and two outer peripheral raceway surfaces (first outer peripheral drive surface 13 and second outer peripheral drive surface 14) arranged between the internal threads 12. The plurality of balls 3 is arranged on each of the two rolling paths 31 and 32 between the two outer peripheral raceway surfaces and the two inner peripheral raceway surfaces. The circulation component 40 is provided at one end and the other end of the nut 10 to circulate the balls 3. The internal thread 12 and the external thread 4 hold the balls 3. The nut 10 has the cylindrical shape, and includes the cylindrical body 11 having the internal thread 12 and the outer peripheral raceway surface (first outer peripheral drive surface 13 and second outer peripheral drive surface 14), and two return paths 21 and 22 penetrating the cylindrical body 11 in the axial direction. The circulation component 40 includes the main body 41 fixed to the cylindrical body 11 of the nut 10, the two communication paths 42 and 43 penetrating the main body 41 and communicating the two rolling paths 31 and 32 and the two return paths 21 and 22, the communication path partition wall 44 between the two communication paths 42 and 43 so as to partition the two communication paths 42 and 43, and two tongues 45 and 46 protruding from the main body 41 to the rolling paths 31 and 32.

According to the embodiment, the nut 10 can be downsized in the axial direction by reducing the axial length of the internal thread 12.

In addition, the cylindrical body 11 of the nut 10 according to the embodiment includes two housing grooves 24 and 24 recessed from both end surfaces in the axial direction so as to house the circulation components 40, respectively. The circulation components 40 are disposed in the housing grooves 24, respectively.

Accordingly, the circulation components 40 do not protrude from the end surfaces 15 and 16 of the nut 10. Therefore, it is possible to avoid an increase in size of the nut 10 in the axial direction.

Although the embodiment has been described above, the ball screw device of the present invention is not limited to the above example. For example, in the embodiment, the thread between the first rolling path 31 and the second rolling path 32 is the internal thread 12, but it may be the external thread 4 according to the ball screw device of the present invention. In this case, an axial length of the external thread 4 is decreased. As a result, a distance between leads of the external thread 4 is decreased. Accordingly, the nut 10 is downsized in the axial direction. Still more, in the embodiment, the balls 3 on the first rolling path 31 and the second rolling path 32 are arranged in the back-to-back combination, but the balls 3 may be arranged in a front-to-front combination. Furthermore, the thickness L10 of the first communication path partition wall 44a and the thickness of the second communication path partition wall 44b may be the same.

### Reference Signs List

1 BALL SCREW DEVICE
2 SCREW SHAFT
3 BALL
4 EXTERNAL THREAD
5 FIRST INNER PERIPHERAL DRIVE SURFACE
6 SECOND INNER PERIPHERAL DRIVE SURFACE
10 NUT
11 CYLINDRICAL BODY
12 INTERNAL THREAD
13 FIRST OUTER PERIPHERAL DRIVE SURFACE
14 SECOND OUTER PERIPHERAL DRIVE SURFACE
21, 22 RETURN PATH
23 RETURN PATH PARTITION WALL
24 HOUSING GROOVE
31, 32 ROLLING PATH
40 CIRCULATION COMPONENT
41 MAIN BODY
42, 43 COMMUNICATION PATH
44 COMMUNICATION PATH PARTITION WALL
44a FIRST COMMUNICATION PATH PARTITION WALL
44b SECOND COMMUNICATION PATH PARTITION WALL
45, 46 TONGUE

## Claims

1. A ball screw device (1) comprising:
a nut (10) including an internal thread and two outer peripheral raceway surfaces arranged between the internal threads;
a screw shaft (2) including an external thread and two inner peripheral raceway surfaces arranged between the external threads;
a plurality of balls (3) arranged on two rolling paths between the two outer peripheral raceway surfaces and the two inner peripheral raceway surfaces; and
two circulation components (40) configured to circulate the plurality of balls (3), wherein
the internal thread and the external thread hold the plurality of balls (3),
the nut (10) includes:
a cylindrical body (11) having a cylindrical shape and including the internal thread and the two outer peripheral raceway surfaces; and
two return paths (21,22) penetrating the cylindrical body (11) in an axial direction parallel to an axis of the screw shaft (2),
**characterized in that**
one of the two circulation components (40) is provided at one end of the nut (10) and an other of the two circulation components (40) is provided on an other end of the nut (10), and
each of the two circulation components (40) includes:
a main body (41) fixed to the cylindrical body (11) of the nut (10);
two communication paths (42,43) penetrating the main body (41) and communicating the two rolling paths and the two return paths (21,22);
a communication path partition wall (44) between the two communication paths (42,43) so as to partition the two communication paths (42,43); and
two tongues (45,46) protruding from the main body (41) to the two rolling paths.

2. The ball screw device (1) according to claim 1, wherein
the cylindrical body (11) of the nut (10) includes two housing grooves recessed from both end surfaces in the axial direction, the two housing grooves configured to house the two circulation components (40), and
the two circulation components (40) are respectively disposed in the two housing grooves.

## Patentansprüche

1. Eine Kugelumlaufspindelvorrichtung (1), umfassend:
eine Mutter (10) mit einem Innengewinde und zwei äußeren Umfangslaufbahnen, die zwischen den Innengewinden angeordnet sind;
eine Spindel (2) mit einem Außengewinde und zwei inneren Umfangslaufbahnen, die zwischen den Außengewinden angeordnet sind;
eine Vielzahl von Kugeln (3), die auf zwei Rollbahnen zwischen den beiden äußeren Umfangslaufbahnen und den beiden inneren Umfangslaufbahnen angeordnet sind; und
zwei Umlaufkomponenten (40), die so ausgebildet sind, dass sie die Vielzahl von Kugeln (3) umlaufen lassen, wobei
das Innengewinde und das Außengewinde die Vielzahl von Kugeln (3) halten,
die Mutter (10) umfasst:
einen zylindrischen Körper (11) mit zylindrischer Form, der das Innengewinde und die beiden äußeren Umfangslaufbahnen aufweist; und
zwei Rücklaufbahnen (21, 22), die den zylindrischen Körper (11) in axialer Richtung parallel zu einer Achse der Schraubenwelle (2) durchdringen,
**dadurch gekennzeichnet, dass**
eine der beiden Zirkulationskomponenten (40) an einem Ende der Mutter (10) und eine andere der beiden Zirkulationskomponenten (40) an einem anderen Ende der Mutter (10) vorgesehen ist, und
jede der beiden Zirkulationskomponenten (40) umfasst:
einen Hauptkörper (41), der am zylindrischen Körper (11) der Mutter (10) befestigt ist;
zwei Verbindungsbahnen (42, 43), die den Hauptkörper (41) durchdringen und die beiden Rollbahnen sowie die beiden Rücklaufbahnen (21, 22) miteinander verbinden;
eine Verbindungsbahn-Trennwand (44) zwischen den beiden Verbindungsbahnen (42, 43), um die beiden Verbindungsbahnen (42, 43) voneinander zu trennen; und
zwei Zungen (45, 46), die vom Hauptkörper (41) zu den beiden Rollbahnen vorstehen.

2. Die Kugelumlaufspindelvorrichtung (1) nach Anspruch 1, wobei
der zylindrische Körper (11) der Mutter (10) zwei Aufnahmerillen aufweist, die von beiden Endflächen in axialer Richtung zurückgesetzt sind, wobei die beiden Aufnahmerillen so ausgebildet sind, dass sie die beiden Zirkulationskomponenten (40) aufnehmen, und
die beiden Zirkulationskomponenten (40) jeweils in den beiden Aufnahmerillen angeordnet sind.

## Revendications

1. Dispositif de vis à billes (1), comprenant :
un écrou (10) incluant un filet interne et deux surfaces de chemin de roulement périphériques extérieures agencées entre les filets internes ;
une tige de vis (2) incluant un filet externe et deux surfaces de chemin de roulement périphériques intérieures agencées entre les filets externes ;
une pluralité de billes (3) agencées sur deux voies de roulement entre les deux surfaces de chemin de roulement périphériques extérieures et les deux surfaces de chemin de roulement périphériques intérieures ; et
deux composants de circulation (40) configurés pour faire circuler la pluralité de billes (3),
dans lequel
le filet interne et le filet externe retiennent la pluralité de billes (3),
l'écrou (10) inclut :
un corps cylindrique (11) ayant une forme cylindrique et incluant le filet interne et les deux surfaces de chemin de roulement périphériques extérieures ; et
deux voies de retour (21, 22) pénétrant dans le corps cylindrique (11) dans une direction axiale parallèle à un axe de la tige de vis (2),
**caractérisé en ce que**
un des deux composants de circulation (40) est prévu à une extrémité de l'écrou (10) et un autre des deux composants de circulation (40) est prévu sur une autre extrémité de l'écrou (10), et
chacun des deux composants de circulation (40) inclut :
un corps principal (41) fixé au corps cylindrique (11) de l'écrou (10) ;
deux voies de communication (42, 43) pénétrant dans le corps principal (41) et mettant en communication les deux voies de roulement et les deux voies de retour (21, 22) ;
une paroi de séparation de voies de communication (44) entre les deux voies de communication (42, 43) afin de séparer les deux voies de communication (42, 43) ; et
deux proéminences (45, 46) faisant saillie depuis le corps principal (41) jusqu'aux deux voies de roulement.

2. Dispositif de vis à billes (1) selon la revendication 1, dans lequel
le corps cylindrique (11) de l'écrou (10) inclut deux rainures de logement évidées à partir des deux surfaces d'extrémité dans la direction axiale, les deux rainures de logement étant configurées pour loger les deux composants de circulation (40), et
les deux composants de circulation (40) sont respectivement disposés dans les deux rainures de logement.
